## Europäisches Patentamt

## European Patent Office

## Office européen des brevets

(19)

(11) Veröffentlichungsnummer: **0 313 776 B1**

# EUROPÄISCHE PATENTSCHRIFT

(12)

(45) Veröffentlichungstag der Patentschrift: **02.12.92**

(51) Int. Cl.⁵: **H04M 1/72**, H04M 1/02

(21) Anmeldenummer: **88114548.6**

(22) Anmeldetag: **07.09.88**

(54) **Ladestation für ein schnurloses Telefon.**

(30) Priorität: **29.10.87 DE 3736608**

(43) Veröffentlichungstag der Anmeldung:
**03.05.89 Patentblatt 89/18**

(45) Bekanntmachung des Hinweises auf die
Patenterteilung:
**02.12.92 Patentblatt 92/49**

(84) Benannte Vertragsstaaten:
**AT BE CH ES FR GB IT LI LU NL**

(56) Entgegenhaltungen:
**EP-A- 0 091 513**
**DE-A- 2 053 862**
**DE-A- 3 309 877**
**US-A- 3 586 787**
**US-A- 3 928 723**

(73) Patentinhaber: **TELENORMA GMBH**
**Mainzer Landstrasse 128-146**
**W-6000 Frankfurt/Main(DE)**

(72) Erfinder: **Herrmann, Lothar, Dipl.-Ing.**

**Verstorben(DE)**

## Beschreibung

Die Erfindung betrifft eine Ladestation für ein schnurloses Telefon nach dem Oberbegriff des Patentanspruchs 1.

Aus der DE-A-33 09 877 ist eine Aufnahme für ein schnurloses Telefon bekannt. Es handelt sich um eine ortsfest angeordnete Station, an der eine Antenne angebracht ist, um eine Funkverbindung mit dem schnurlosen Telefon herstellen zu können. Diese Aufnahme dient dazu, eine sichere Aufbewahrung des schnurlosen Telefons zu ermöglichen, wobei die im schnurlosen Telefon befindliche Akku-Batterie aufgeladen wird. Zum Laden der Batterie ist also das schnurlose Telefon immer an der zugeordneten orstfesten Station abzulegen. Außerdem können in der ortsfest angeordneten Station ein Lautsprecher, ein Mikrofon sowie Bedienungstasten angeordnet sein.

Das Aufladen der Akku-Batterie des schnurlosen Telefons, so wie ein Lauthör und Freisprechbetrieb sind also nur an der ortsfest angeordneten Station möglich. Es kommt aber häufig vor, daß ein schnurloses Telefon aus betrieblichen Gründen abseits von der orstfest angeordneten Station betrieben werden muß, wobei es vorkommen kann, daß die Akku-Batterie soweit entladen wird, daß das schnurlose Telefon nicht mehr betriebsbereit ist.

Zur Lösung dieses Problems wird in der EP-A-0 150 376 eine Station zur Aufnahme eines aufladbaren, schnurlosen Telefons beschrieben, wobei eine zusätzliche Aufnahme für eine Batteriekassette vorgesehen ist. Eine derartige Station kann also neben der im schnurlosen Telefon befindlichen Akku-Batterie zusätzlich eine weitere Batterie ständig geladen bereithalten. Sollte es also vorkommen, daß die im schnurlosen Telefon befindliche Akku-Batterie entladen ist, so kann der Benutzer zur ortstfesten Station gehen und die entladene Batterie gegen eine frisch geladene Batterie austauschen. Um dies zu bewerkstelligen muß jedoch der Benutzer des drahtlosen Telefons zunächst einmal erkennen, daß die Batterie entladen ist, und er muß sich sodann zu der ortsfesten Station begeben, um die Batterien auszutauschen, wobei einige Handgriffe erforderlich sind.

Die Aufgabe der vorliegenden Erfindung besteht darin, eine Ladestation für ein schnurloses Telefon vorzustellen, die unabhängig von der orstfest angeordneten, mit dem Fernmeldenetz verbundenen Station innerhalb der Reichweite des schnurlosen Telefons überall aufgestellt werden kann, wo sich ein Anschluß (Steckdose) des Stromversorgungsnetzes befindet. Außerdem soll unabhängig von der orstfest angeordneten Station mit der erfindungsgemäßen Ladestation ein Lauthörbetrieb und zumindest ein Quasi-Freisprechbetrieb möglich sein, so daß beim Wahrnehmen eines Anrufes das schnurlose Telefon nicht unbedingt in die Hand genommen werden muß.

Diese Aufgabe wird durch eine Merkmalskombination gelöst, wie sie im Patentanspruch 1 angegeben ist.

Damit wird in vorteilhafter Weise erreicht, daß nicht orstfest angeordnete Ladestationen unabhängig vom Fernmeldenetz und ohne Zuordnung zu bestimmten schnurlosen Telefonen an jeder Stelle innerhalb des Empfangs- und Sendebereiches des schnurlosen Telefons bereitstehen können. Diese Ladestationen sind dann lediglich über einen Netztransformator mit dem 220-V-Stromversorgungsnetz verbunden und können leicht an den Aufbewahrungsort des schnurlosen Telefons mitgenommen werden. Somit ist bei Ablage des schnurlosen Telefons eine ständige Ladung der Akku-Batterie unabhängig von der orstfesten Station gewährleistet, wobei außerdem die Betriebsbereitschaft des schnurlosen Telefons gewährleistet ist. Der Benutzer kann also unabhängig vom Fernmeldenetz, d.h. unabhängig von der orstfesten Station die Vorteile des Lauthör- und/oder Freisprechbetriebs nutzen.

Weiterbildungen der Erfindung ergeben sich aus den Unteransprüchen.

Ein Ausführungsbeispiel der Erfindung wird nachfolgend anhand von Zeichnungen näher erläutert.

Es zeigt:

Fig. 1    ein schnurloses Telefon.

Fig. 2    die nicht ortsfeste Ladestation.

Fig. 3    ein in der Ladestation befindliches schnurloses Telefon.

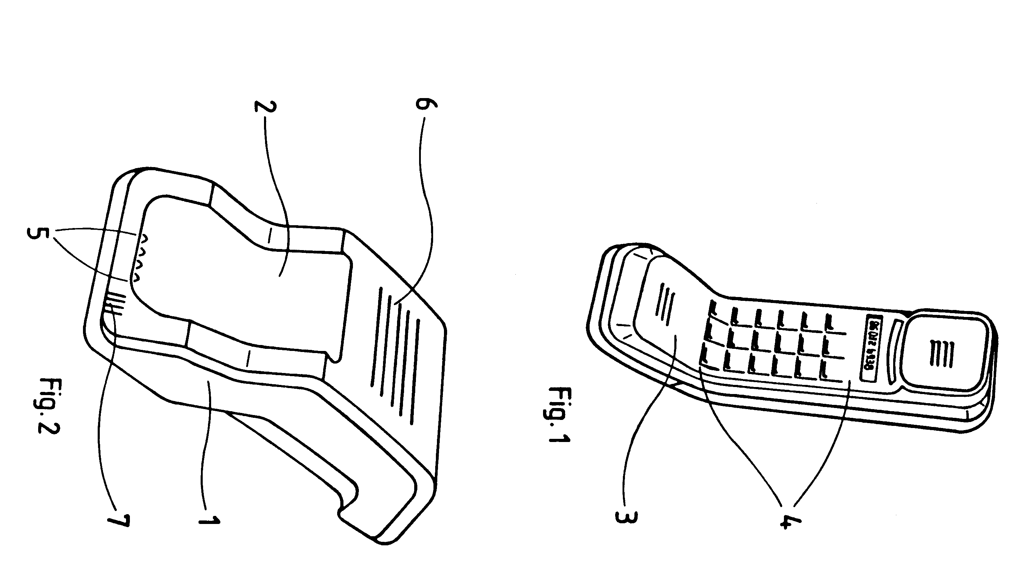

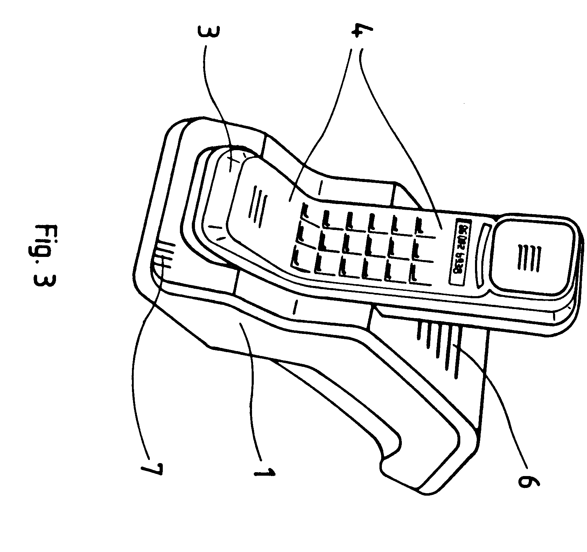

Die in der Fig. 2 dargestllte Ladestation 1 weist eine Mulde 2 auf, die so geformt ist, daß sie sich den Konturen des schnurlosen Telefons 3 anpaßt. Die Ränder dieser Mulde sind treppenförmig gestaltet, damit die am schnurlosen Telefon 3 befindlichen Bedienungselemente 4 leicht zugänglich sind, wenn sich das schnurlose Telefon 3 in der Ladestation 1 befindet. Am unteren Rand der Mulde sind zusätzliche Kontakte 5 angeordnet, um eine Verbindung mit der in der Ladestation befindlichen Lauthöreinrichtung 6 zu ermöglichen. Entsprechende Gegenkontakte befinden sich in nicht dargestellter Weise am schnurlosen Telefon.

Einer Weiterbildung der Erfindung entsprechend kann zusätzlich ein Mikrofon 7 in der Ladestation 1 eingebaut sein, um einen echten Freisprechbetrieb zu ermöglichen. Hierzu sind lediglich die bei einem Freisprechbetrieb bekannten Bedienungsprozeduren auszuführen.

Die erfindungegemäße Ladestation 1 ist als Tischgerät ausgeführt und kann überall dort, wo ein schnurloses Telefon hingelegt werden kann, angeordnet werden. Da derartige Ladestationen nicht einem bestimmten schnurlosen Telefon zugeordnet werden müssen, kann ohne weiteres jedes gleichartig ausgeführte schnurlose Telefon 3 in eine beliebige Ladestation 1 eingelegt werden. Der Benutzer eines schnurlosen Telefons ist also nicht an seine ortsfeste Station gebunden und kann mit Hilfe dieser Ladestation 1 eine Komfortbetrieb des schnurlosen Telefons durchführen.

Die hier als Tischgerät ausgeführte Ladestation ist jedoch ohne weiteres auch als Wandstation denkbar, wobei dann die Mulde 2 so ausgeführt sein muß, daß das schnurlose Telefon nicht herausfallen kann. Es ergibt sich dann sicherer Aufbewahrungsort für das schnurlose Telefon 3, wenn wegen der Ausgestaltung des Arbeits- oder Betriebsraums keine Ablagefläche zur Verfügung steht.

Bei der Verwendung bzw. Beschaltung der zusätzlichen Kontakte 5 ergeben sich mehrere Möglichkeiten. Wenn nur ein Lauthörbetrieb möglich sein soll, so werden über die Kontakte 5 die Fernhöreranschlüsse zur Lauthöreinrichtung 6 geführt. Wenn auch ein Freisprechmikrofon 7 eingebaut ist, so können Freisprechmikrofon 7 und Lauthöreinrichtung 6 zweidrähtig über die Kontakte 5 mit dem schnurlosen Telefon 3 verbunden sein.

Anstelle der Kontakte 5 kann auch in der Ladestation 1 eine nicht dargestellte induktive Koppeleinrichtung eingebaut sein, worüber die Lauthöreinrichtung mit dem Fernhörer des schnurlosen Telefons 3 verbunden ist. Wenn nur Lauthörbetrieb vorgesehen ist, können dann die Kontakte 5 entfallen. Bei zusätzlichem Freisprechbetrieb können die Kontakte 5 dazu benutzt werden, da s in der Ladestation 1 befindliche Mikrofon 7 mit dem schnurlosen Telefon 3 zu verbinden, wobei dann die Lauthöreinrichtung 6 induktiv angekoppelt ist und unabhängig davon für das Mikrofon 7 ein separater Weg über die Kontakte 5 besteht.

## Patentansprüche

1. Ladestation für ein schnurloses Telefon (3), welches über Funk mit einer am Fernsprechnetz angeschlossenen Feststation verbunden ist, wobei an der Feststation eine Ablage für das schnurlose Telefon vorgesehen ist, wo Kontakte angebracht sind, über welche die Batterie des schnurlosen Telefons aufgeladen wird,
dadurch gekennzeichnet,
daß zusätzliche Ladestationen (1) ohne Anschluß an das Fernsprechnetz vorgesehen sind, bei denen die Ablagemulde (2) für das schnurlose Telefon (3) so ausgestaltet ist, daß bei dessen Ablage die Bedienungselemente (4) für den Benutzer zugänglich sind, und daß zusätzliche Kontakte (5) vorgesehen sind, über die eine in der Ladestation (1) befindliche Lauthöreinrichtung (6) kontaktierbar und ansteuerbar ist.

2. Ladestation nach Anspruch 1,
dadurch gekennzeichnet,
daß in der Ladestation (1) ein zusätzliches Mikrofon (7) eingebaut ist, welches zusammen mit der Lauthöreinrichtung (6) über die zusätzlichen Kontakte (5) mit dem schnurlosen Telefon (3) verbunden ist um einen Freisprechbetrieb zu ermöglichen.

3. Ladestation nach Anspruch 1,
dadurch gekennzeichnet,
daß in der Ablagemulde (2) eine induktive Koppeleinrichtung eingebaut ist, worüber die Verbindung zwischen der Lauthöreinrichtung (6) und dem schnurlosen Telefon (3) ohne Kontakte hergestellt wird.

## Claims

1. Charging station for a cordless telephone (3), which is connected by way of radio with a fixed station linked to a telephone system, wherein provided at the fixed station is a rest for the cordless telephone, where contacts are present by which the battery of the cordless telephone is charged, characterised thereby that additional charging stations (1) are provided without link to the telephone system, in which the deposit trough (2) for the cordless telephone (3) is so designed that when it is deposited the operating elements (4) are accessible for the user, and that additional contacts (5) are provided by way of which an amplifier equipment (6) disposed in the charging station (1) can be contacted and controlled.

2. Charging station according to claim 1, characterised thereby that incorporated into the charging station (1) is an additional microphone (7) which, together with the amplifier equipment (6), is connected by way of additional contacts (5) with the cordless telephone (3) in order to enable a free-speaking operation.

3. Charging station according to claim 2, characterised thereby that incorporated into the deposit trough (2) is an inductive coupling equipment whereby the connection between the amplifier equipment (6) and the cordless telephone (3) can be produced without contacts.

## Revendications

1. Unité de recharge pour un téléphone (3) sans cordon, qui est relié à une unité fixe connectée à un réseau téléphonique par radiophonie, l'unité fixe comportant un logement pour le téléphone sans cordon, lequel réceptacle est muni de contacts par l'intermédiaire desquels la batterie recharge le téléphone sans fil, caractérisée en ce que sont prévues des unités de recharge supplémentaires (1) sans raccordement au réseau téléphonique, dans lesquelles unités le logement (2) pour le téléphone sans fil (3) est formé de manière que les organes de commande (4) soient accessibles aux usagers, et en ce que sont prévus des contacts supplémentaires (5) au moyen desquels est contacté et commandé un dispositif haut-parleur (6) disposé dans l'unité de recharge (1).

2. Unité de recharge selon la revendication 1, caractérisée en ce qu'un microphone (7) supplémentaire est incorporé dans l'unité, lequel microphone ainsi que le dispositif haut-parleur (6) sont reliés au téléphone (3) sans cordon au moyen des contacts supplémentaires (5) de manière à permettre la conversation mains libres.

3. Unité de recharge selon la revendication 1, caractérisée en ce que dans le logement (2) est incorporé un dispositif de couplage inductif qui établit la liaison sans contacts entre le dispositif haut-parleur (6) et le téléphone sans cordon (3).

Fig. 1

Fig. 2

**Fig. 3**